# EUROPEAN PATENT APPLICATION

(11) **EP 4 722 554 A1**
(43) Date of publication of application: **08.04.2026**
(21) Application number: 24830352.1
(22) Date of filing: 28.05.2024
(51) Int. Cl.: F16C 37/00, H02K 5/20, H02K 9/19, H02K 5/24, F16C 33/66, F16H 57/04

(54) **MOTOR WITH DISTRIBUTED OIL PASSING OF MOTOR SHAFT, POWER ASSEMBLY AND ELECTRIC VEHICLE**

(30) Priority: 30.06.2023 CN 202321712385 U
(71) Applicant: Huawei Digital Power Technologies Co., Ltd., Shenzhen, Guangdong 518043 (CN)
(72) Inventor: CHEN, Fei, Shenzhen, Guangdong 518043 (CN); ZHU, Lingkun, Shenzhen, Guangdong 518043 (CN); GAO, Feng, Shenzhen, Guangdong 518043 (CN)
(74) Representative: Maiwald GmbH
(86) International application number: PCT/CN2024/095842
(87) International publication number: WO 2025/001704

(57) **Abstract**

This application provides a motor with distributed oil-passing on a motor shaft, a powertrain, and an electric vehicle. The motor includes a motor end cover, a motor rotor, a motor bearing, and a motor shaft. The motor end cover and the motor rotor are spaced from each other along an axial direction of the motor. The motor end cover includes a motor shaft hole. The motor shaft hole is configured to accommodate the motor bearing and a part of the motor shaft. The motor bearing is sleeved on the motor shaft. The motor shaft is rotatably connected to the motor end cover through the motor bearing, so that the motor shaft can rotate relative to the motor end cover. The motor shaft includes a motor shaft cavity and at least one motor bearing lubricating oil hole. Along the axial direction of the motor, the motor shaft hole penetrates the motor end cover, and the motor shaft cavity penetrates the motor shaft. Along a radial direction of the motor, the motor bearing lubricating oil hole penetrates the motor shaft. Along the axial direction of the motor, the motor bearing lubricating oil hole, the motor bearing and the motor rotor are spaced from each other. In this application, cooling oil in the motor shaft cavity can lubricate the motor bearing through the motor bearing lubricating oil hole, to avoid a failure of the motor bearing and ensure normal operation of the motor.

## Description

### CROSS-REFERENCE TO RELATED APPLICATIONS

This application claims priority to Chinese Patent Application No. 202321712385.5, filed with the China National Intellectual Property Administration on June 30, 2023 and entitled "MOTOR WITH DISTRIBUTED OIL-PASSING ON MOTOR SHAFT, POWERTRAIN, AND ELECTRIC VEHICLE", which is incorporated herein by reference in its entirety.

### TECHNICAL FIELD

This application relates to the field of motor technologies, and in particular, to a motor with distributed oil-passing on a motor shaft, a powertrain, and an electric vehicle.

### BACKGROUND

An integrated powertrain is usually used, in an existing electric vehicle, as a power source. Currently, a motor and a motor control unit are usually integrated into a two-in-one powertrain, or a motor, a motor control unit, and a reducer are usually integrated into a three-in-one powertrain, or a motor, a motor control unit, a reducer, and another component of the electric vehicle are usually integrated into an all-in-one powertrain. The motor is configured to convert electric energy into mechanical energy. The motor usually includes a motor shaft and a motor bearing, and the motor bearing is configured to implement rotation of the motor shaft relative to a motor housing. The current motor has a problem of insufficient lubrication of the motor bearing. This may cause the motor bearing to be ablated or damaged, and have negative impact on running of the motor.

### SUMMARY

This application provides a motor with distributed oil-passing on a motor shaft, a powertrain, and an electric vehicle.

According to a first aspect, an embodiment of this application provides a motor. The motor includes a motor end cover, a motor rotor, a motor bearing, and a motor shaft, the motor end cover and the motor rotor are spaced from each other along an axial direction of the motor, the motor end cover includes a motor shaft hole, the motor shaft hole is configured to accommodate the motor bearing and a part of the motor shaft, the motor bearing is sleeved on the motor shaft, and the motor shaft is rotatably connected to the motor end cover through the motor bearing, the motor shaft includes a motor shaft cavity and at least one motor bearing lubricating oil hole; along the axial direction of the motor, the motor shaft hole penetrates the motor end cover, and the motor shaft cavity penetrates the motor shaft; along a radial direction of the motor, the motor bearing lubricating oil hole penetrates the motor shaft; and along the axial direction of the motor, the motor bearing lubricating oil hole, the motor bearing, and the motor rotor are sequentially spaced from each other.

In this embodiment of this application, the motor bearing lubricating oil hole that penetrates the motor shaft is provided on the motor shaft, so that cooling oil transmitted in the motor shaft cavity can be transmitted from the motor shaft cavity inside the motor shaft to the motor bearing of the motor shaft through the motor bearing lubricating oil hole. The motor bearing can be effectively lubricated without increasing usage of cooling oil, avoiding ablation or damage of the motor bearing due to insufficient lubrication, and ensuring a normal operation of the motor. The motor bearing lubricating oil hole is provided on a side that is of the motor bearing and that is away from the motor rotor, so that a temperature of the cooling oil transmitted from the motor bearing lubricating oil hole is increased without passing through the motor rotor, the cooling oil can absorb more heat of the motor bearing, and cooling effect on the motor bearing is better.

In an embodiment, the motor further includes a bearing wave pad. The bearing wave pad is sleeved on the motor shaft, the bearing wave pad has a gap, and the gap of the bearing wave pad is for the motor bearing lubricating oil hole to communicate with the motor bearing; the bearing wave pad, the motor bearing, and the motor rotor are arranged along the axial direction of the motor, and the bearing wave pad is adjacent to the motor bearing; and a projection of the motor bearing lubricating oil hole along the radial direction of the motor is located in a projection of the bearing wave pad along the radial direction of the motor.

In this embodiment of this application, the bearing wave pad is a waveform washer, and the motor bearing and the bearing wave pad are arranged along the axial direction of the motor, so that the bearing wave pad can bear an axial force from the motor bearing and eliminate noise and vibration. This improves performance of the motor. The bearing wave pad has a gap. Along the radial direction of the motor, the projection of the motor bearing lubricating oil hole is located in the projection of the bearing wave pad, so that after cooling oil in the motor shaft cavity flows out of the motor bearing lubricating oil hole, the cooling oil can flow into the gap of the bearing wave pad and the motor bearing sequentially. The projection of the motor bearing lubricating oil hole along the radial direction of the motor is a projection of an area enclosed by the motor bearing lubricating oil hole along the radial direction of the motor. The bearing wave pad is disposed close to the motor bearing along the axial direction of the motor. This helps shorten a transmission path of the cooling oil between the motor bearing lubricating oil hole and the motor bearing, and reduce losses.

In an embodiment, the motor shaft includes a plurality of motor bearing lubricating oil holes. The plurality of motor bearing lubricating oil holes are spaced from each other along a circumferential direction of the motor; a hole size of each of the motor bearing lubricating oil holes along the axial direction of the motor is less than a length of the bearing wave pad along the axial direction of the motor; and along the circumferential direction of the motor, a hole size of each of the motor bearing lubricating oil holes is less than a spacing between two adjacent motor bearing lubricating oil holes.

In this embodiment of this application, the plurality of motor bearing lubricating oil holes are spaced from each other on the motor shaft, so that cooling oil transmitted to the motor bearing increases, and different parts of the motor bearing can be lubricated. This avoids insufficient local lubrication of the motor bearing. Along the axial direction of the motor, the hole size of the motor bearing lubricating oil hole is less than the length of the bearing wave pad, to ensure that the cooling oil flowing through the motor bearing lubricating oil hole can flow into the gap of the bearing wave pad, and improve utilization of the cooling oil. Along the circumferential direction of the motor, the hole size of the motor bearing lubricating oil hole is less than a spacing between two adjacent motor bearing lubricating oil holes. The hole size of the motor bearing lubricating oil hole is set in a small range, to avoid opening an excessively large through hole on the motor shaft, and improve structural strength of the motor shaft. In addition, the spacing between two adjacent motor bearing lubricating oil holes is set in a large range, which is equivalent to limiting a quantity of the motor bearing lubricating oil holes, so that excessive cooling oil can be prevented from flowing out of the motor shaft cavity from the motor bearing lubricating oil holes, and cooling and lubrication effect of the cooling oil on other components in the motor can be ensured.

In an embodiment, the motor further includes a stator of a resolver. The stator of the resolver and the motor bearing each are sleeved on the motor shaft and located in the motor shaft hole, the stator of the resolver, the motor bearing, and the motor stator are arranged along an axial direction of the motor shaft, the stator of the resolver, the motor shaft, the motor bearing, and a hole wall of the motor shaft hole are enclosed to form a motor bearing chamber, and the motor bearing lubricating oil hole communicates with the motor bearing chamber.

In this embodiment of this application, the motor bearing and the bearing wave pad are located in the motor bearing chamber, the motor bearing lubricating oil hole communicates with the motor bearing chamber, and the cooling oil can enter the motor bearing chamber through the motor bearing lubricating oil hole and is in contact with the motor bearing, to lubricate the motor bearing, avoid damage to the motor bearing, improve a service life, and ensure long-term stable running of the motor. In addition, the motor bearing chamber can also be configured to temporarily store liquid, so that the motor bearing is better lubricated.

In an embodiment, the motor shaft further includes at least one rotor shunt hole, where along the radial direction of the motor, the rotor shunt hole penetrates the motor shaft, and a projection of the rotor shunt hole at least partially overlaps a projection of the motor rotor; along the axial direction of the motor, the motor bearing lubricating oil hole, the motor bearing, and the rotor shunt hole are spaced from each other; and a hole size of the rotor shunt hole is greater than a hole size of the motor bearing lubricating oil hole.

In this embodiment of this application, the motor rotor is sleeved on an outer side of the motor shaft, the rotor shunt hole penetrates the motor shaft along the radial direction of the motor, and the rotor shunt hole communicates with the motor shaft cavity. Along the radial direction of the motor, the projection of the rotor shunt hole at least partially overlaps the projection of the motor rotor, so that the cooling oil in the motor shaft cavity can be transmitted to the motor rotor outside the motor shaft through the rotor shunt hole, to cool the motor rotor, the projection of the rotor shunt hole along the radial direction of the motor is a projection of an area enclosed by the rotor shunt hole along the radial direction of the motor. When the motor is running at a high speed, the motor rotor generates a large amount of heat, and the motor rotor needs to be cooled. In this solution, the motor bearing lubricating oil hole and the rotor shunt hole each are provided on the motor shaft, and the hole size of the rotor shunt hole is greater than the hole size of the motor bearing lubricating oil hole, so that when the motor is in a high speed operation condition, the cooling oil mainly cools the motor rotor through the rotor shunt hole; or when the motor is in a low speed operation condition, a part of cooling oil can lubricate the motor bearing through the motor bearing lubricating oil hole, to meet cooling and lubrication requirements of the motor in different cases, and improve operation performance of the motor.

In an embodiment, the motor shaft includes a plurality of motor bearing lubricating oil holes and a plurality of rotor shunt holes. The plurality of motor bearing lubricating oil holes are spaced from each other along a circumferential direction of the motor; and a total length of hole sizes of the plurality of motor bearing lubricating oil holes is less than a total length of hole sizes of the plurality of rotor shunt holes.

In this embodiment of this application, the plurality of rotor shunt holes are provided on the motor shaft, so that the cooling oil transmitted to the motor rotor increases, and different parts of the motor rotor can be cooled, avoiding local overheating of the motor rotor. The total length of the hole sizes of the plurality of motor bearing lubricating oil holes is set to be less than the total length of the hole sizes of the plurality of rotor shunt holes, so that the cooling oil can be properly allocated, to avoid insufficient cooling of the motor rotor caused by excessive cooling oil used to lubricate the motor bearing.

In an embodiment, a ratio of a hole size of each of the rotor shunt holes to a hole size of each of the motor bearing lubricating oil holes is greater than or equal to 2 and less than or equal to 4.

In this embodiment of this application, the hole size of the rotor shunt hole and the hole size of the motor bearing lubricating oil hole are set in a range greater than or equal to 2 and less than or equal to 4, so that more cooling oil can flow out through the rotor shunt hole. When the motor is in a high speed operation condition, the cooling oil mainly cools the motor rotor through the rotor shunt hole; or when the motor is in a low speed operation condition, a small part of the cooling oil may lubricate the motor bearing through the motor bearing lubricating oil hole.

In an embodiment, the motor further includes a shaft hole sealing member, where the shaft hole sealing member includes a radial sealing portion and a lubricating oil circulation portion, and the radial sealing portion is configured to be sealed and fastened to an inner wall of the motor shaft cavity along the radial direction of the motor; the radial sealing portion, the lubricating oil circulation portion, and the rotor shunt hole are arranged along the axial direction of the motor, and the lubricating oil circulation portion is fastened to the radial sealing portion; and along the radial direction of the motor, the lubricating oil circulation portion and the inner wall of the motor shaft cavity are spaced from each other, and a projection of the motor bearing lubricating oil hole along the radial direction of the motor is located in a projection of the lubricating oil circulation portion along the radial direction of the motor.

In this embodiment of this application, the shaft hole sealing member includes the radial sealing portion and the lubricating oil circulation portion that are fastened to each other. Along the axial direction of the motor, the radial sealing portion is located on a side that is of the lubricating oil circulation portion and that is away from the rotor shunt hole. The radial sealing portion is sealed and fastened to the inner wall of the motor shaft cavity, to prevent the cooling oil from flowing out of the motor shaft cavity along the axial direction of the motor and not flowing into the motor bearing lubricating oil hole. There is a gap between the lubricating oil circulation portion and the inner wall of the motor shaft cavity along the radial direction of the motor. The projection of the lubricating oil circulation portion along the radial direction of the motor covers the projection of the motor bearing lubricating oil hole along the radial direction of the motor, so that when the cooling oil in the motor shaft cavity can flow through the shaft hole sealing member, the cooling oil can flow into the motor bearing lubricating oil hole through the gap between the lubricating oil circulation portion and the inner wall of the motor shaft cavity. In this embodiment of this application, the shaft hole sealing member is disposed in the motor shaft cavity, so that flow resistance of the cooling oil flowing into the motor bearing lubricating oil hole can be increased, and a hole size of the motor shaft that is along the radial direction of the motor and that corresponds to the motor bearing lubricating oil hole can be reduced, to control a flow volume of the cooling oil used to lubricate the motor bearing, and prevent the cooling oil in the motor shaft cavity from directly flowing out of the motor shaft cavity along the axial direction of the motor. In addition, the shaft hole sealing member can further prevent impurities from entering the motor shaft cavity.

In an embodiment, the radial sealing portion and the lubricating oil circulation portion are integrally formed. This solution helps enhance structural strength of the shaft hole sealing member.

In an embodiment, along the radial direction of the motor, a distance between the lubricating oil circulation portion and an inner wall of the motor shaft cavity is less than the hole size of the motor bearing lubricating oil hole, and the distance between the lubricating oil circulation portion and the inner wall of the motor shaft cavity is less than the hole size of the rotor shunt hole; and a length of the lubricating oil circulation portion along the axial direction of the motor is greater than the hole size of the motor bearing lubricating oil hole.

In this embodiment of this application, the lubricating oil circulation portion and the inner wall of the motor shaft cavity are spaced from each other along the radial direction of the motor, and a gap between the lubricating oil circulation portion and the inner wall of the motor shaft cavity along the radial direction of the motor is less than the hole size of the motor bearing lubricating oil hole and the hole size of the rotor shunt hole, so that the lubricating oil circulation portion limits flowing of the cooling oil flowing into the motor bearing, and avoids excessive cooling oil flowing through the motor bearing lubricating oil hole. The length of the lubricating oil circulation portion along the axial direction of the motor is set to be greater than the hole size of the motor bearing lubricating oil hole, so that before the cooling oil flows into the motor bearing lubricating oil hole, the gap between the lubricating oil circulation portion and the inner wall of the motor shaft cavity is first filled, and then flows into the motor bearing lubricating oil hole, to implement flowing limiting on the motor bearing lubricating oil hole.

In an embodiment, along the axial direction of the motor, a distance between the rotor shunt hole and the lubricating oil circulation portion is greater than a length of the lubricating oil circulation portion, and the distance between the rotor shunt hole and the lubricating oil circulation portion is greater than a distance between the lubricating oil circulation portion and the motor bearing.

In this embodiment of this application, a length of the lubricating oil circulation portion along the axial direction of the motor is set to be small, so that the lubricating oil circulation portion does not occupy an excessively large size in the axial direction of the motor. If the length of the lubricating oil circulation portion is greater than the distance between the rotor shunt hole and the lubricating oil circulation portion, it is difficult for the cooling oil to flow into the motor bearing lubricating oil hole in both a high speed operation condition and a low speed operation condition. This affects lubrication of the motor bearing. The distance between the lubricating oil circulation portion and the motor bearing along the axial direction of the motor is set to be small, so that a transmission path of the cooling oil between the lubricating oil circulation portion and the motor bearing can be shortened, and losses of the cooling oil on the transmission path can be reduced.

According to a second aspect, an embodiment of this application provides a powertrain. The powertrain includes a reducer and the motor according to the first aspect or any one of the foregoing embodiments of the first aspect, the reducer includes a reducer input shaft, the reducer input shaft is fastened to a motor shaft, and the reducer input shaft is configured to communicate with a motor shaft cavity. In this application, a motor bearing lubricating oil hole that penetrates the motor shaft is disposed on the motor shaft to lubricate and cool the motor bearing, to ensure operation performance of the motor, and improve operation performance and heat dissipation performance of the powertrain.

In an embodiment, the powertrain includes an integrated housing, the integrated housing includes a reducer accommodating cavity and a motor accommodating cavity, the motor accommodating cavity is configured to accommodate the motor, the reducer accommodating cavity is configured to accommodate the reducer, the motor accommodating cavity penetrates the integrated housing along a first direction and communicates with the reducer accommodating cavity, the first direction is parallel to an axial direction of the motor, and a motor end cover and the reducer are respectively arranged on two sides of the motor along the first direction.

In an embodiment, the powertrain further includes a motor control unit and a three-phase input copper bar, the motor end cover further includes a winding wiring hole, the winding wiring hole penetrates the motor end cover along the axial direction of the motor, the motor further includes a motor winding, the motor winding is accommodated in the motor accommodating cavity, the three-phase input copper bar is electrically connected to the motor winding and the motor control unit through the winding wiring hole, the three-phase input copper bar includes three input copper bars, and the three input copper bars are sequentially spaced from each other along a circumferential direction of the motor.

In an embodiment, the integrated housing includes a controller accommodating cavity, a direct current input interface mounting hole, and an alternating current output interface mounting hole, the controller accommodating cavity is configured to accommodate the motor control unit, the controller accommodating cavity and the motor accommodating cavity are arranged along a second direction, the second direction is perpendicular to the first direction, and the motor end cover includes an alternating current output interface communication hole. Along the first direction, the direct current input interface mounting hole and the alternating current output interface mounting hole separately penetrate the integrated housing and communicate with the controller accommodating cavity, the alternating current output interface communication hole penetrates the motor end cover, the direct current input interface mounting hole and the alternating current output interface mounting hole are arranged opposite to each other, a projection of the alternating current output interface communication hole covers a projection of the alternating current output interface mounting hole, and a projection of the three-phase input copper bar partially overlaps a projection of the winding wiring hole and the projection of the alternating current output interface communication hole. Along a radial direction of the motor, a spacing between the alternating current output interface communication hole and a motor shaft hole is greater than a spacing between the winding wiring hole and the motor shaft hole.

According to a third aspect, an embodiment of this application provides an electric vehicle, including a vehicle body, a wheel, and the motor according to the first aspect or any one of the foregoing embodiments of the first aspect or the powertrain according to the second aspect or any one of the foregoing embodiments of the second aspect. The motor or the powertrain is configured to drive the wheel, the vehicle body is configured to fasten the motor or the powertrain, a motor shaft cavity in the motor or in the powertrain fastened to the vehicle body is configured to communicate with a heat exchanger in the electric vehicle, and cooling oil in the heat exchanger cools a motor bearing in the motor through a motor bearing lubricating oil hole in the motor shaft cavity.

### BRIEF DESCRIPTION OF DRAWINGS

To describe technical solutions in embodiments of this application more clearly, the following describes accompanying drawings used in embodiments of this application.
FIG. 1 is a diagram of a structure of an electric vehicle according to an embodiment of this application;
FIG. 2 is a diagram of a structure of a powertrain according to an embodiment of this application;
FIG. 3 is a diagram of a structure of a powertrain according to an embodiment of this application;
FIG. 4 is a sectional view of the powertrain shown in FIG. 3 along AA;
FIG. 5 is a partial enlarged view of an M1 part in the powertrain shown in FIG. 4;
FIG. 6 is a diagram of a partial structure of a powertrain according to an embodiment of this application;
FIG. 7 is a partial exploded diagram of a powertrain according to an embodiment of this application; and
FIG. 8 is a diagram of a partial structure of a powertrain according to an embodiment of this application.

### DESCRIPTION OF EMBODIMENTS

The following describes technical solutions in embodiments of this application with reference to accompanying drawings in embodiments of this application. It is clear that the described embodiments are only a part rather than all of embodiments of this application.

Terms such as "first" and "second" in this specification are only intended for a purpose of description, and shall not be understood as an indication or implication of relative importance or implicit indication of a quantity of indicated technical features. Therefore, a feature limited by "first" or "second" may explicitly or implicitly include one or more features. In descriptions of this application, unless otherwise stated, "a plurality of" means two or more than two.

In addition, in this specification, position terms such as "top" and "bottom" are defined relative to positions of structures in the accompanying drawings. It should be understood that these position terms are relative concepts used for relative description and clarification, and may correspondingly change according to changes in the positions of the structures.

For ease of understanding, the following explains and describes related technical terms used in embodiments of this application.

Parallelism: Parallelism defined in embodiments of this application is not limited to absolute parallelism. The definition of the parallelism may be understood as basic parallelism. A case in which there is no absolute parallelism due to assembling tolerance, design tolerance, impact of structural flatness, or another factor is allowed.

Verticality: Verticality defined in embodiments of this application is not limited to an absolute vertical intersection (where an included angle is 90 degrees) relationship. A case in which there is no absolute perpendicular intersection due to assembling tolerance, design tolerance, impact of structural flatness, or another factor is allowed. An error within a small angle range is allowed. For example, an assembling error range of 80 degrees to 100 degrees may be understood as a vertical relationship.

First direction Y: is parallel to an axial direction of a motor, where the axial direction of the motor is an axial direction of a motor shaft.

Second direction Z: is perpendicular to the first direction Y and a third direction X.

Third direction X: is perpendicular to the first direction Y and the second direction Z.

The motor includes a motor bearing and a motor shaft, and the motor bearing is configured to bear a load from the motor shaft. If lubrication of the motor bearing is poor, it is easy to cause the motor bearing to be burned. This seriously affects performance of the motor bearing and normal running of the motor.

Embodiments of this application provide a motor with distributed oil-passing on a motor shaft. The motor includes a motor end cover, a motor rotor, a motor bearing, and a motor shaft. The motor end cover and the motor rotor are spaced from each other along an axial direction of the motor. The motor end cover includes a motor shaft hole. The motor shaft hole is configured to accommodate the motor bearing and a part of the motor shaft. The motor bearing is sleeved on the motor shaft. The motor shaft is rotatably connected to the motor end cover through the motor bearing, so that the motor shaft can rotate relative to the motor end cover. The motor shaft includes a motor shaft cavity and at least one motor bearing lubricating oil hole. Along the axial direction of the motor, the motor shaft hole penetrates the motor end cover, the motor shaft cavity penetrates the motor shaft, and the motor shaft cavity is used to transmit cooling oil. Along a radial direction of the motor, the motor bearing lubricating oil hole penetrates the motor shaft, and the motor shaft cavity communicates with the motor bearing lubricating oil hole, so that the cooling oil can be in contact with the motor bearing through the motor shaft cavity and the motor bearing lubricating oil hole to cool the motor bearing. Along the axial direction of the motor, the motor bearing lubricating oil hole, the motor bearing, and the motor rotor are spaced from each other, so that the motor bearing lubricating oil hole and the motor rotor are located on two sides of the motor bearing, and the motor bearing lubricating oil hole can cool the motor bearing on a side away from the motor rotor. In embodiments of this application, the cooling oil in the motor shaft cavity can lubricate the motor bearing through the motor bearing lubricating oil hole, to avoid ablation or damage of the motor bearing. This helps improve a service life of the motor.

The motor provided in this application may be used in a powertrain, and the motor included in the powertrain in this application may be used in an electric vehicle.

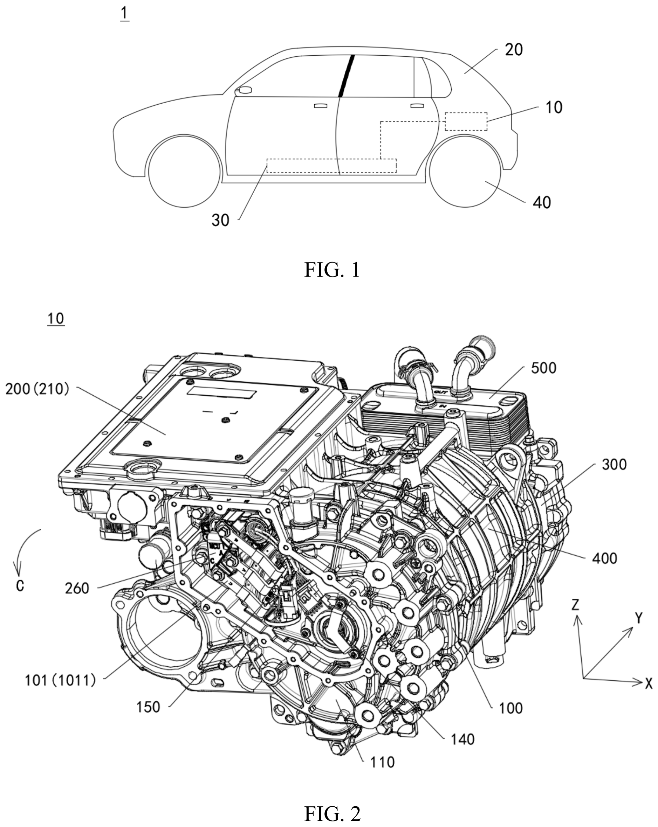

FIG. 1 is a diagram of a structure of an electric vehicle 1 according to an embodiment of this application. In this embodiment of this application, the electric vehicle 1 includes a powertrain 10, a vehicle body 20, a battery pack 30, and wheels 40. The powertrain 10 and the battery pack 30 are fastened to the vehicle body 20. The powertrain 10 is configured to receive power supplied by the battery pack 30, and is configured to drive the wheels 40.

In this embodiment of this application, the battery pack 30 may be referred to as a power battery.

In this embodiment of this application, the electric vehicle 1 is a wheeled device driven or pulled by a power apparatus. In an embodiment, the electric vehicle 1 includes a special operation vehicle such as a passenger vehicle, a commercial vehicle, an engineering rescue vehicle, a sprinkler, a suction sewage truck, a cement mixer, a crane, or a medical vehicle. For example, the electric vehicle 1 includes an electric vehicle (Electric Vehicle, EV), a pure electric vehicle (Pure Electric Vehicle/Battery Electric Vehicle, PEV/BEV), a hybrid electric vehicle (Hybrid Electric Vehicle, HEV for short), a range extended electric vehicle (Range Extended Electric Vehicle, REEV), a plug-in hybrid electric vehicle (Plug-in Hybrid Electric Vehicle, PHEV), a new energy vehicle (New Energy Vehicle), or the like.

In this embodiment of this application, the electric vehicle 1 includes one or more powertrains 10. In an embodiment, the electric vehicle 1 is a front or rear-wheel drive vehicle. The electric vehicle 1 includes one powertrain 10, and the powertrain 10 is configured to be in transmission connection to front wheels or rear wheels of the electric vehicle 1. In an embodiment, the electric vehicle 1 is a front-rear-wheel dual-drive vehicle. The electric vehicle 1 includes two powertrains 10. The two powertrains 10 are respectively configured to be in transmission connection to a front wheel and a rear wheel of the electric vehicle 1. In an embodiment, the electric vehicle 1 is a front-rear-wheel four-drive vehicle. The electric vehicle 1 includes four powertrains 10. The four powertrains 10 are respectively configured to be in transmission connection to four wheels of the electric vehicle 1.

FIG. 2 is a diagram of a structure of the powertrain 10 according to this embodiment of this application. In this embodiment, the powertrain 10 includes a motor 100. A direct current output by the battery pack 30 is converted into an alternating current in the powertrain 10 and then the alternating current is transmitted to the motor 100, to drive a motor shaft 140 of the motor 100 to rotate, and provide power for the wheels 40.

In this embodiment, the powertrain 10 further includes a motor control unit 200 and a reducer 300. The motor 100 is separately connected to the motor control unit 200 and the reducer 300. The motor control unit 200 is configured to convert a direct current into an alternating current and transmit the alternating current to the motor 100. The motor 100 converts electric energy into mechanical energy. An output end of the motor shaft transmits power to the wheels 40 of the electric vehicle 1 by using the reducer 300, to drive the wheels 40 to rotate.

The following describes in detail the motor 100 in the powertrain 10 provided in this embodiment of this application.

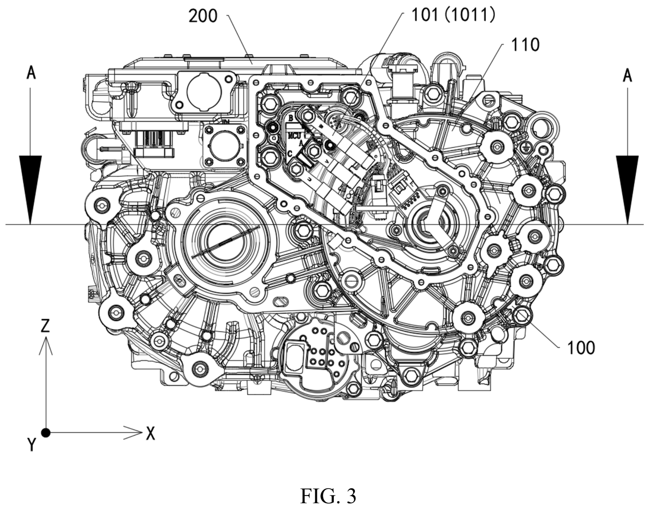

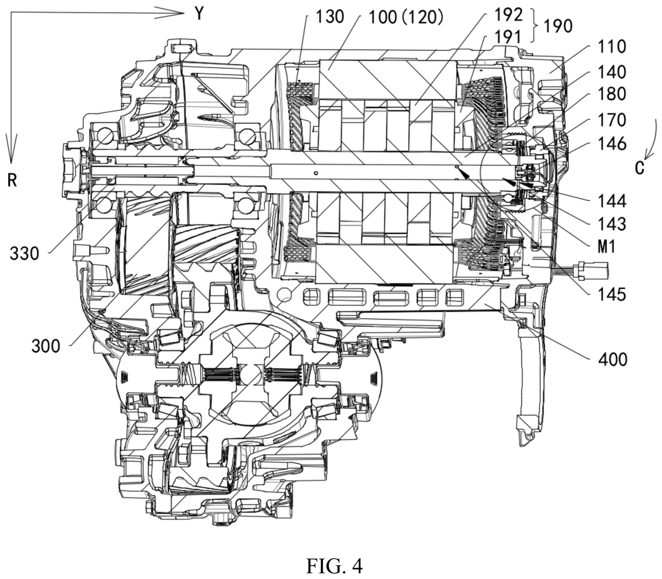

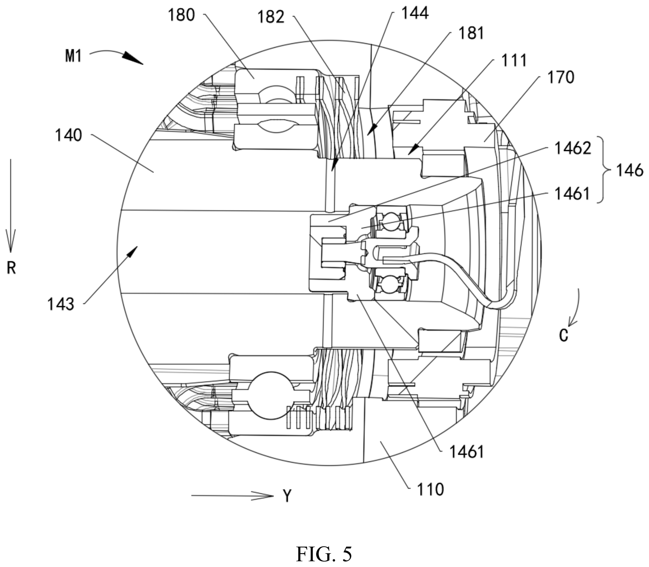

Refer to FIG. 3 to FIG. 5. FIG. 3 is a diagram of a structure of the powertrain 10 according to this embodiment of this application, FIG. 4 is a sectional view of the powertrain 10 shown in FIG. 3 along AA, and FIG. 5 is a partial enlarged view of an M1 part in the powertrain 10 shown in FIG. 4.

In an embodiment, the motor 100 includes a motor rotor 190, a motor stator 120, a motor shaft 140, and a motor winding 130. After an alternating current is supplied to the motor winding 130, an alternating magnetic flux is generated. The alternating magnetic flux generated by the motor winding 130 interacts with a permanent magnetic flux generated by the motor rotor 190, so that the motor rotor 190 rotates relative to the motor stator 120. The motor rotor 190 is fastened to the motor shaft 140 and is rotatably connected to the motor end cover 110, so that the motor shaft 140 rotates with the motor rotor 190 relative to the motor end cover 110. The motor stator 120 is rotatably connected to the motor shaft 140, so that the motor shaft 140 can rotate relative to the motor stator 120 to convert electric energy into mechanical energy, and an output end of the motor shaft 140 is configured to transmit the mechanical energy.

In an embodiment, the motor 100 includes a motor end cover 110 and a motor bearing 180 (as shown in FIG. 3 to FIG. 5). The motor end cover 110 and the motor rotor 190 are spaced from each other along an axial direction Y of the motor (as shown in FIG. 4). The motor end cover 110 includes a motor shaft hole 111 (as shown in FIG. 5). The motor shaft hole 111 is configured to accommodate the motor bearing 180 and a part of the motor shaft 140 (as shown in FIG. 4 and FIG. 5). The motor bearing 180 is sleeved on the motor shaft 140 (as shown in FIG. 4 and FIG. 5), the motor shaft 140 is rotatably connected to the motor end cover 110 through the motor bearing 180, and the motor shaft 140 includes a motor shaft cavity 143 and at least one motor bearing lubricating oil hole 144 (as shown in FIG. 5). Along the axial direction Y of the motor, the motor shaft hole 111 penetrates the motor end cover 110, and the motor shaft cavity 143 penetrates the motor shaft 140 (as shown in FIG. 4). Along a radial direction R of the motor, a motor bearing lubricating oil hole 144 penetrates the motor shaft 140 (as shown in FIG. 5). Along the axial direction Y of the motor, the motor bearing lubricating oil hole 144, the motor bearing 180, and the motor rotor 190 are sequentially spaced from each other (as shown in FIG. 4 and FIG. 5).

In this embodiment of this application, the motor bearing 180 is sleeved on an outer side of the motor shaft 140, and space enclosed by an inner side of the motor shaft 140 forms the motor shaft cavity 143. The motor bearing lubricating oil hole 144 penetrates the motor shaft 140 along the radial direction R of the motor, and the motor bearing lubricating oil hole 144 communicates with the motor shaft cavity 143, so that cooling oil in the motor shaft cavity 143 can be transmitted to the motor bearing 180 outside the motor shaft 140 through the motor bearing lubricating oil hole 144. In an embodiment, the motor bearing 180 includes a steel ball and a bearing ring. The steel ball is movably disposed in the bearing ring, and the cooling oil enters a gap between the steel ball and the bearing ring through the motor bearing lubricating oil hole 144. This helps reduce abrasion between the steel ball and the bearing ring, and improve a service life of the motor bearing 180.

In an embodiment, the motor shaft cavity 143 communicates with a heat exchanger 500, and the heat exchanger 500 is configured to transmit the cooling oil to the motor shaft cavity 143. The motor shaft cavity 143 is configured to transmit the cooling oil. If the motor bearing lubricating oil hole 144 is not provided on the motor shaft 140, to lubricate the motor bearing 180, a flow volume of the cooling oil in the motor 100 needs to be increased. Cooling oil on a side that is of the motor bearing 180 and that is close to the motor rotor 190 along the axial direction Y of the motor is used for cooling and lubrication, or cooling oil that flows out of the motor rotor 190 is used to cool the motor bearing 180. Because usage of cooling oil increases, costs increase. In addition, added cooling oil cannot accurately flow into the motor bearing 180, and lubrication effect is not good. The cooling oil flowing out from the motor rotor 190 absorbs heat of the motor rotor 190, and a temperature of the cooling oil is increased. The motor bearing 180 is cooled through the cooling oil with an increased temperature, and effect is not good.

In this embodiment of this application, the motor bearing lubricating oil hole 144 that penetrates the motor shaft 140 is provided on the motor shaft 140, so that cooling oil transmitted in the motor shaft cavity 143 can be transmitted from the motor shaft cavity 143 inside the motor shaft 140 to the motor bearing 180 of the motor shaft 140 through the motor bearing lubricating oil hole 144. The motor bearing 180 can be effectively lubricated without increasing usage of cooling oil, avoiding ablation or damage of the motor bearing 180 due to insufficient lubrication, and ensuring a normal operation of the motor 100. The motor bearing lubricating oil hole 144 is provided on a side that is of the motor bearing 180 and that is away from the motor rotor 190, so that a temperature of the cooling oil transmitted from the motor bearing lubricating oil hole 144 is increased without passing through the motor rotor 190, the cooling oil can absorb more heat of the motor bearing 180, and cooling effect on the motor bearing 180 is better.

In an embodiment, a type of the cooling oil includes a glycol-based cooling oil, a propylene-glycol-based cooling oil, a glycerine-based cooling oil, a mineral oil, and the like. For example, the cooling oil is the glycol-based cooling oil.

Still refer to FIG. 5. In an embodiment, the motor 100 further includes a bearing wave pad 182, where the bearing wave pad 182 is sleeved on the motor shaft 140, the bearing wave pad 182 has a gap, and the gap of the bearing wave pad 182 is for the motor bearing lubricating oil hole 144 to communicate with the motor bearing 180. The bearing wave pad 182, the motor bearing 180, and the motor rotor 190 are arranged along an axial direction Y of the motor, and the bearing wave pad 182 is adjacent to the motor bearing 180. A projection of the motor bearing lubricating oil hole 144 along a radial direction R of the motor is located in a projection of the bearing wave pad 182 along the radial direction R of the motor.

In this embodiment of this application, the bearing wave pad 182 is a waveform washer, and the motor bearing 180 and the bearing wave pad 182 are arranged along the axial direction Y of the motor, so that the bearing wave pad 182 can bear an axial force from the motor bearing 180 and eliminate noise and vibration. This improves performance of the motor. The bearing wave pad 182 has a gap. Along the radial direction R of the motor, the projection of the motor bearing lubricating oil hole 144 is located in the projection of the bearing wave pad 182, so that after cooling oil in the motor shaft cavity 143 flows out of the motor bearing lubricating oil hole 144, the cooling oil can flow into the gap of the bearing wave pad 182 and the motor bearing 180 sequentially. The projection of the motor bearing lubricating oil hole 144 along the radial direction R of the motor is a projection of an area enclosed by the motor bearing lubricating oil hole 144 along the radial direction R of the motor. The bearing wave pad 182 is disposed close to the motor bearing 180 along the axial direction Y of the motor. This helps shorten a transmission path of the cooling oil between the motor bearing lubricating oil hole 144 and the motor bearing 180, and reduce losses.

In an embodiment, the bearing wave pad 182 includes a plurality of washers arranged along the axial direction Y of the motor, and shapes of the washers are not limited. It should be noted that a gap in the bearing wave pad 182 is a gap between two washers.

It should be noted that, in this embodiment of this application, the projection along the radial direction R of the motor is a projection along the radial direction R of the motor on a projection surface perpendicular to the radial direction R of the motor, where the projection surface of the projection along the radial direction R of the motor is perpendicular to the radial direction R of the motor. In this embodiment of this application, a projection surface of the projection of the motor bearing lubricating oil hole 144 along the radial direction R of the motor is the same as a projection surface of the projection of the bearing wave pad 182 along the radial direction R of the motor. The projection of the motor bearing lubricating oil hole 144 along the radial direction R of the motor is a projection of an area enclosed by a hole wall of the motor bearing lubricating oil hole 144 along the radial direction R of the motor.

Still refer to FIG. 5. In an embodiment, the motor shaft 140 includes a plurality of motor bearing lubricating oil holes 144, and the plurality of motor bearing lubricating oil holes 144 are spaced from each other along a circumferential direction C of the motor. A hole size of each of the motor bearing lubricating oil holes 144 along the axial direction Y of the motor is less than a length of the bearing wave pad 182 along the axial direction Y of the motor. Along the circumferential direction C of the motor, a hole size of each of the motor bearing lubricating oil holes 144 is less than a spacing between two adjacent motor bearing lubricating oil holes 144.

In this embodiment of this application, the plurality of motor bearing lubricating oil holes 144 are spaced from each other on the motor shaft 140, so that cooling oil transmitted to the motor bearing 180 increases, and different parts of the motor bearing 180 can be lubricated. This avoids insufficient local lubrication of the motor bearing 180. For example, a quantity of motor bearing lubricating oil holes 144 may be 2, 3, 4, or another positive integer greater than 1. Along the axial direction Y of the motor, the hole size of the motor bearing lubricating oil hole 144 is less than the length of the bearing wave pad 182, to ensure that the cooling oil flowing through the motor bearing lubricating oil hole 144 can flow into the gap of the bearing wave pad 182, and improve utilization of the cooling oil. Along the circumferential direction C of the motor, the hole size of the motor bearing lubricating oil hole 144 is less than a spacing between two adjacent motor bearing lubricating oil holes 144. The hole size of the motor bearing lubricating oil hole 144 is set in a small range, to avoid opening an excessively large through hole on the motor shaft 140, and improve structural strength of the motor shaft 140. In addition, the spacing between two adjacent motor bearing lubricating oil holes 144 is set in a large range, which is equivalent to limiting a quantity of the motor bearing lubricating oil holes 144, so that excessive cooling oil can be prevented from flowing out of the motor shaft cavity 143 from the motor bearing lubricating oil holes 144, and cooling and lubrication effect of the cooling oil on other components in the motor 100 can be ensured.

In an embodiment, the plurality of motor bearing lubricating oil holes 144 are arranged evenly spaced from each other along the circumferential direction C of the motor. This solution helps to ensure dynamic balance performance of the motor shaft 140.

Still refer to FIG. 4 and FIG. 5. In an embodiment, the motor 100 further includes a stator 170 of a resolver. The stator 170 of the resolver and the motor bearing 180 each are sleeved on the motor shaft 140 and located in the motor shaft hole 111 (as shown in FIG. 4 and FIG. 5). The stator 170 of the resolver, the motor bearing 180, and the motor stator 120 are arranged along the axial direction of the motor shaft 140 (as shown in FIG. 4 and FIG. 5). The stator 170 of the resolver, the motor shaft 140, the motor bearing 180, and a hole wall of the motor shaft hole 111 are enclosed to form a motor bearing chamber 181 (as shown in FIG. 5), and the motor bearing lubricating oil hole 144 communicates with the motor bearing chamber 181 (as shown in FIG. 5).

In this embodiment of this application, the motor bearing 180 and the bearing wave pad 182 are located in the motor bearing chamber 181, the motor bearing lubricating oil hole 144 communicates with the motor bearing chamber 181, and the cooling oil can enter the motor bearing chamber 181 through the motor bearing lubricating oil hole 144 and is in contact with the motor bearing 180, to lubricate the motor bearing 180, avoid damage to the motor bearing 180, improve a service life, and ensure long-term stable running of the motor 100. In addition, the motor bearing chamber 181 can also be configured to temporarily store liquid, so that the motor bearing 180 is better lubricated.

Still refer to FIG. 4 and FIG. 5. In an embodiment, the motor shaft 140 further includes at least one rotor shunt hole 145 (as shown in FIG. 4), where along the radial direction R of the motor, the rotor shunt hole 145 penetrates the motor shaft 140, and a projection of the rotor shunt hole 145 at least partially overlaps with a projection of the motor rotor 190 (as shown in FIG. 4). Along the axial direction Y of the motor, the motor bearing lubricating oil hole 144, the motor bearing 180, and the rotor shunt hole 145 are spaced from each other (as shown in FIG. 4 and FIG. 5). A hole size of the rotor shunt hole 145 is greater than a hole size of the motor bearing lubricating oil hole 144 (as shown in FIG. 4 and FIG. 5).

In this embodiment of this application, the motor rotor 190 is sleeved on an outer side of the motor shaft 140, the rotor shunt hole 145 penetrates the motor shaft 140 along the radial direction R of the motor, and the rotor shunt hole 145 communicates with the motor shaft cavity 143. Along the radial direction R of the motor, the projection of the rotor shunt hole 145 at least partially overlaps the projection of the motor rotor 190, so that the cooling oil in the motor shaft cavity 143 can be transmitted to the motor rotor 190 outside the motor shaft 140 through the rotor shunt hole 145, to cool the motor rotor 190, the projection of the rotor shunt hole 145 along the radial direction R of the motor is a projection of an area enclosed by the rotor shunt hole 145 along the radial direction R of the motor. When the motor 100 is running at a high speed, the motor rotor 190 generates a large amount of heat, and the motor rotor 190 needs to be cooled. In this solution, the motor bearing lubricating oil hole 144 and the rotor shunt hole 145 each are provided on the motor shaft 140, and the hole size of the rotor shunt hole 145 is greater than the hole size of the motor bearing lubricating oil hole 144, so that when the motor 100 is in a high speed operation condition, the cooling oil mainly cools the motor rotor 190 through the rotor shunt hole 145; or when the motor 100 is in a low speed operation condition, a part of cooling oil can lubricate the motor bearing 180 through the motor bearing lubricating oil hole 144, to meet cooling and lubrication requirements of the motor 100 in different cases, and improve operation performance of the motor 100.

Still refer to FIG. 4. In an embodiment, the motor rotor 190 includes a rotor end plate 191 and a rotor iron core 192. The rotor end plate 191 and the rotor iron core 192 each are sleeved on the motor shaft 140, and along the axial direction Y of the motor, the rotor end plate 191 is arranged on two sides of the rotor iron core 192. The rotor end plate 191 includes an end plate shaft hole (not shown in the figure) that penetrates the rotor end plate 191, and a rotor oil channel is disposed in the rotor iron core 192, the end plate shaft hole is for the rotor oil channel to communicate with the rotor shunt hole 145, and a projection of the end plate shaft hole along the radial direction R of the motor covers the projection of the rotor shunt hole 145 along the radial direction R of the motor. In an embodiment, the end plate shaft hole is further configured to adjust dynamic balance of the motor rotor 190, and the rotor end plate 191 may also be referred to as a dynamic balance end plate. In an embodiment, the rotor end plate 191 is configured to perform axial positioning on the rotor iron core 192.

Still refer to FIG. 4 and FIG. 5. In an embodiment, the motor shaft 140 includes a plurality of motor bearing lubricating oil holes 144 and a plurality of rotor shunt holes 145 (as shown in FIG. 4 and FIG. 5), and the plurality of motor bearing lubricating oil holes 144 are spaced from each other along the circumferential direction C of the motor (as shown in FIG. 5). A total length of hole sizes of the plurality of motor bearing lubricating oil holes 144 is less than a total length of hole sizes of the plurality of rotor shunt holes 145 (as shown in FIG. 4 and FIG. 5).

In this embodiment of this application, the plurality of rotor shunt holes 145 are provided on the motor shaft 140, so that the cooling oil transmitted to the motor rotor 190 increases, and different parts of the motor rotor 190 can be cooled, avoiding local overheating of the motor rotor 190. The total length of the hole sizes of the plurality of motor bearing lubricating oil holes 144 is set to be less than the total length of the hole sizes of the plurality of rotor shunt holes 145, so that the cooling oil can be properly allocated, to avoid insufficient cooling of the motor rotor 190 caused by excessive cooling oil used to lubricate the motor bearing 180.

In an embodiment, a ratio of a hole size of each of the rotor shunt holes 145 to a hole size of each of the motor bearing lubricating oil holes 144 is greater than or equal to 2 and less than or equal to 4.

In this embodiment of this application, the hole size of the rotor shunt hole 145 and the hole size of the motor bearing lubricating oil hole 144 are set in a range greater than or equal to 2 and less than or equal to 4, so that more cooling oil can flow out through the rotor shunt hole 145. When the motor 100 is in a high speed operation condition, the cooling oil mainly cools the motor rotor 190 through the rotor shunt hole 145; or when the motor 100 is in a low speed operation condition, a small part of the cooling oil may lubricate the motor bearing 180 through the motor bearing lubricating oil hole 144.

Still refer to FIG. 5. In an embodiment, the motor 100 further includes a shaft hole sealing member 146, where the shaft hole sealing member 146 includes a radial sealing portion 1461 and a lubricating oil circulation portion 1462, and along the radial direction R of the motor, the radial sealing portion 1461 is configured to be sealed and fastened to an inner wall of the motor shaft cavity 143. The radial sealing portion 1461, the lubricating oil circulation portion 1462, and the rotor shunt hole 145 are arranged along the axial direction Y of the motor, and the lubricating oil circulation portion 1462 is fastened to the radial sealing portion 1461. Along the radial direction R of the motor, the lubricating oil circulation portion 1462 and the inner wall of the motor shaft cavity 143 are spaced from each other, and the projection of the motor bearing lubricating oil hole 144 along the radial direction R of the motor is located in a projection of the lubricating oil circulation portion 1462 along the radial direction R of the motor.

In this embodiment of this application, the shaft hole sealing member 146 includes the radial sealing portion 1461 and the lubricating oil circulation portion 1462 that are fastened to each other. Along the axial direction Y of the motor, the radial sealing portion 1461 is located on a side that is of the lubricating oil circulation portion 1462 and that is away from the rotor shunt hole 145. The radial sealing portion 1461 is sealed and fastened to the inner wall of the motor shaft cavity 143, to prevent the cooling oil from flowing out of the motor shaft cavity 143 along the axial direction Y of the motor and not flowing into the motor bearing lubricating oil hole 144. There is a gap between the lubricating oil circulation portion 1462 and the inner wall of the motor shaft cavity 143 along the radial direction R of the motor. The projection of the lubricating oil circulation portion 1462 along the radial direction R of the motor covers the projection of the motor bearing lubricating oil hole 144 along the radial direction R of the motor, so that when the cooling oil in the motor shaft cavity 143 can flow through the shaft hole sealing member 146, the cooling oil can flow into the motor bearing lubricating oil hole 144 through the gap between the lubricating oil circulation portion 1462 and the inner wall of the motor shaft cavity 143. In this embodiment of this application, the shaft hole sealing member 146 is disposed in the motor shaft cavity 143, so that flow resistance of the cooling oil flowing into the motor bearing lubricating oil hole 144 can be increased, and a hole size of the motor shaft 140 that is along the radial direction R of the motor and that corresponds to the motor bearing lubricating oil hole 144 can be reduced, to control a flow volume of the cooling oil used to lubricate the motor bearing 180, and prevent the cooling oil in the motor shaft cavity 143 from directly flowing out of the motor shaft cavity 143 along the axial direction Y of the motor. In addition, the shaft hole sealing member 146 can further prevent impurities from entering the motor shaft cavity 143.

In an embodiment, the radial sealing portion 1461 and the lubricating oil circulation portion 1462 are integrally formed. This solution helps enhance structural strength of the shaft hole sealing member 146.

Still refer to FIG. 4 and FIG. 5. In an embodiment, along the radial direction R of the motor, a distance between the lubricating oil circulation portion 1462 and the inner wall of the motor shaft cavity 143 is less than a hole size of the motor bearing lubricating oil hole 144 (as shown in FIG. 5), and the distance between the lubricating oil circulation portion 1462 and the inner wall of the motor shaft cavity 143 is less than the hole size of the rotor shunt hole 145 (as shown in FIG. 4 and FIG. 5). A length of the lubricating oil circulation portion 1462 along the axial direction Y of the motor is greater than the hole size of the motor bearing lubricating oil hole 144 (as shown in FIG. 5).

In this embodiment of this application, the lubricating oil circulation portion 1462 and the inner wall of the motor shaft cavity 143 are spaced from each other along the radial direction R of the motor, and a gap between the lubricating oil circulation portion 1462 and the inner wall of the motor shaft cavity 143 along the radial direction R of the motor is less than the hole size of the motor bearing lubricating oil hole 144 and the hole size of the rotor shunt hole 145, so that the lubricating oil circulation portion 1462 limits flowing of the cooling oil flowing into the motor bearing 180, and avoids excessive cooling oil flowing through the motor bearing lubricating oil hole 144. The length of the lubricating oil circulation portion 1462 along the axial direction Y of the motor is set to be greater than the hole size of the motor bearing lubricating oil hole 144, so that before the cooling oil flows into the motor bearing lubricating oil hole 144, the gap between the lubricating oil circulation portion 1462 and the inner wall of the motor shaft cavity 143 is filled, and then flows into the motor bearing lubricating oil hole 144, to implement flowing limiting on the motor bearing lubricating oil hole 144.

Still refer to FIG. 4 and FIG. 5. In an embodiment, along the axial direction Y of the motor, a distance between the rotor shunt hole 145 and the lubricating oil circulation portion 1462 is greater than the length of the lubricating oil circulation portion 1462 (as shown in FIG. 4 and FIG. 5), and a distance between the rotor shunt hole 145 and the lubricating oil circulation portion 1462 is greater than a distance between the lubricating oil circulation portion 1462 and the motor bearing 180 (as shown in FIG. 4 and FIG. 5).

In this embodiment of this application, a length of the lubricating oil circulation portion 1462 along the axial direction Y of the motor is set to be small, so that the lubricating oil circulation portion 1462 does not occupy an excessively large size in the axial direction Y of the motor. If the length of the lubricating oil circulation portion 1462 is greater than the distance between the rotor shunt hole 145 and the lubricating oil circulation portion 1462, it is difficult for the cooling oil to flow into the motor bearing lubricating oil hole 144 in both a high speed operation condition and a low speed operation condition. This affects lubrication of the motor bearing 180. The distance between the lubricating oil circulation portion 1462 and the motor bearing 180 along the axial direction Y of the motor is set to be small, so that a transmission path of the cooling oil between the lubricating oil circulation portion 1462 and the motor bearing 180 can be shortened, and losses of the cooling oil on the transmission path can be reduced.

The motor 100 provided in this embodiment of this application may be used as an independent apparatus in cooperation with a motor control unit and a reducer. Alternatively, the motor 100 may be integrated with at least one of the motor control unit and the reducer and used in the powertrain 10.

Still refer to FIG. 2 and FIG. 4. In an embodiment, the powertrain 10 includes a reducer 300 and a motor 100 (as shown in FIG. 2 and FIG. 4), the reducer 300 includes a reducer input shaft 330 (as shown in FIG. 4), the reducer input shaft 330 is fastened to the motor shaft 140 (as shown in FIG. 4), and the reducer input shaft 330 is configured to communicate with the motor shaft cavity 143.

In this embodiment of this application, the reducer 300 includes a reducer input shaft, a reducer bearing, a gear assembly, and the like. The reducer input shaft 330 of the reducer 300 is fastened to the motor shaft 140 of the motor 100, and the reducer input shaft 330 is configured to receive mechanical energy transmitted by the motor shaft 140 and drive a wheel to rotate. In this embodiment of this application, the reducer input shaft 330 communicates with the motor shaft cavity 143, and the cooling oil flows between the reducer input shaft 330 and the motor shaft cavity 143, to cool and lubricate internal components of the reducer 300 and the motor 100.

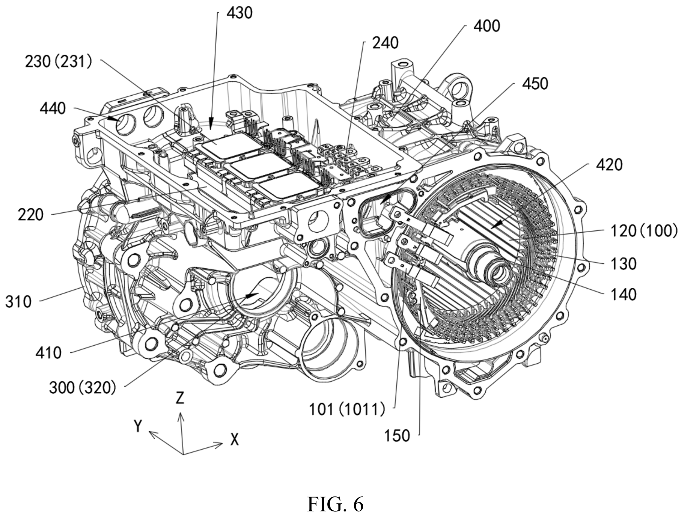

Refer to FIG. 2 and FIG. 6. FIG. 6 is a diagram of a partial structure of a powertrain 10 according to an embodiment of this application. In an embodiment, the powertrain 10 includes an integrated housing 400 (as shown in FIG. 2 and FIG. 6), the integrated housing 400 includes a reducer accommodating cavity 410 and a motor accommodating cavity 420 (as shown in FIG. 6), the motor accommodating cavity 420 is configured to accommodate the motor 100, and the reducer accommodating cavity 410 is configured to accommodate the reducer 300, the motor accommodating cavity 420 penetrates the integrated housing 400 along a first direction Y and communicates with the reducer accommodating cavity 410 (as shown in FIG. 6). The first direction Y is parallel to the axial direction Y of the motor, and a motor end cover 110 and the reducer 300 are respectively arranged on two sides of the motor 100 along the first direction Y (as shown in FIG. 2).

In this embodiment of this application, the integrated housing 400 is configured to accommodate the reducer 300 and the motor 100. The reducer 300 is located in the reducer accommodating cavity 410, the motor 100 is located in the motor accommodating cavity 420, and the reducer 300 and the motor 100 share one integrated housing 400.

In an embodiment, the integrated housing 400 includes a motor housing, a reducer housing, and a controller housing. The motor housing is enclosed to form the motor accommodating cavity 420, the reducer housing are enclosed to form the reducer accommodating cavity 410, and the controller housing are enclosed to form a controller accommodating cavity 430. The motor 100 includes a motor shaft 140, a motor bearing 180, a motor stator 120, a motor winding 130, a stator of a resolver, and the like. The motor control unit 200 includes a capacitor module 220, a power module 230, a circuit board, a copper bar assembly 240, and the like.

In an embodiment, the reducer accommodating housing, the motor accommodating housing, and the controller accommodating housing are an integrated structure, or the integrated housing 400 is an integrated structure. In an embodiment, the reducer accommodating housing, the motor accommodating housing, and the controller accommodating housing share a housing of adjacent parts. In an embodiment, the reducer accommodating housing and the motor accommodating housing are an integrated structure.

In this embodiment of this application, the integrated housing 400 is configured to accommodate the reducer 300, the motor 100, and the motor control unit 200. In comparison with a split powertrain 10, this implementation helps improve integration of the powertrain 10, so that space utilization of the powertrain 10 is increased, and costs are reduced; and stability of an overall structure of the powertrain 10 can be further enhanced in this implementation.

In this embodiment of this application, the controller accommodating cavity 430 does not communicate with the reducer accommodating cavity 410 and the motor accommodating cavity 420. This can prevent the cooling oil in the motor accommodating cavity 420 and the reducer accommodating cavity 410 from flowing into the controller accommodating cavity 430 and causing electrical interference to an electrical component in the motor control unit 200, and ensure a normal operation of the motor control unit 200.

In this embodiment of this application, the motor shaft 140 of the motor 100 is fastened to the reducer 300. After receiving an alternating current transmitted by an input copper bar 1011, the motor 100 converts electric energy into mechanical energy, and transmits power to the reducer 300 through the motor shaft 140. Then, the reducer 300 drives the wheels 40 to rotate. The input copper bar 1011, the motor end cover 110, the motor 100, and the reducer 300 are sequentially arranged along the axial direction Y of the motor, and comply with a transfer path of energy. This helps reduce an energy loss.

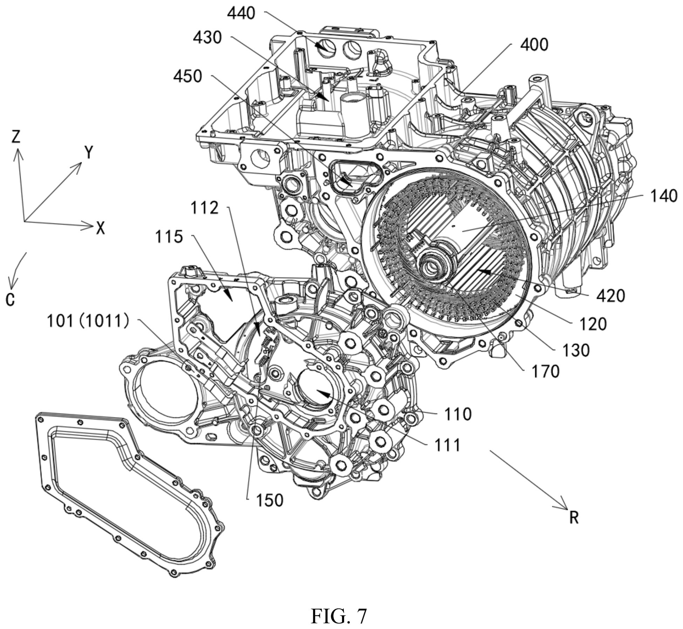

Refer to FIG. 2 and FIG. 7. FIG. 7 is a partial exploded view of a powertrain 10 according to an embodiment of this application. In this embodiment, the powertrain 10 further includes a motor control unit 200 and a three-phase input copper bar 101 (as shown in FIG. 2). The motor end cover 110 further includes a winding wiring hole 112 (as shown in FIG. 7). The winding wiring hole 112 penetrates the motor end cover 110 along an axial direction Y of the motor (as shown in FIG. 7). The motor 100 further includes a motor winding 130 (as shown in FIG. 7). The motor winding 130 is accommodated in the motor accommodating cavity 420 (as shown in FIG. 7), the three-phase input copper bar 101 is electrically connected to the motor winding 130 and the motor control unit 200 (as shown in FIG. 2 and FIG. 7) through the winding wiring hole 112, and the three-phase input copper bar 101 includes three input copper bars 1011 (as shown in FIG. 2 and FIG. 7), the three input copper bars 1011 are sequentially spaced from each other along a circumferential direction C of the motor (as shown in FIG. 2 and FIG. 7).

In this embodiment of this application, the motor control unit 200 is electrically connected to the motor winding 130 of the motor 100 by using the three-phase input copper bar 101, and the three input copper bars 1011 in the three-phase input copper bar 101 transmit a three-phase alternating current to the motor winding 130. The three input copper bars 1011 are spaced from each other along the circumferential direction C of the motor. This helps reduce electrical interference between the three input copper bars 1011 and ensures electrical connection stability.

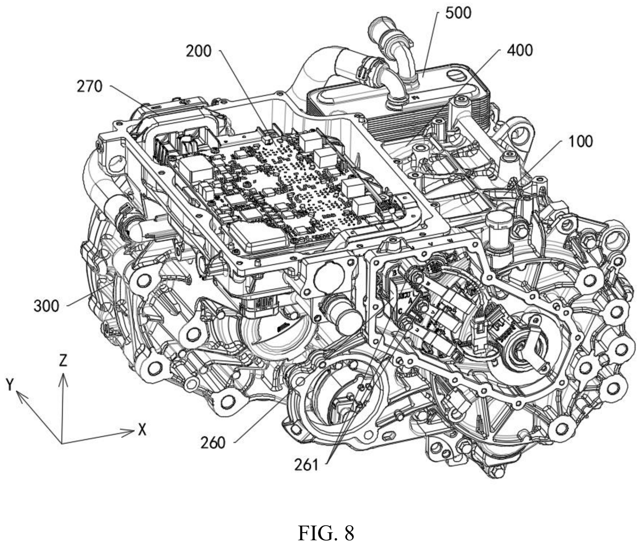

Refer to FIG. 7 and FIG. 8. FIG. 8 is a diagram of a partial structure of a powertrain 10 according to an embodiment of this application. In this embodiment, an integrated housing 400 includes a direct current input interface mounting hole 440 and an alternating current output interface mounting hole 450. A controller accommodating cavity 430 is configured to accommodate a motor control unit 200. The controller accommodating cavity 430 and the motor accommodating cavity 420 are arranged along a second direction Z, and the second direction Z is perpendicular to a first direction Y.

In an embodiment, the motor control unit 200 further includes a direct current input interface 270, and the direct current input interface mounting hole 440 is configured to fasten the direct current input interface 270. The direct current input interface 270 is configured to connect to the battery pack 30 to receive a direct current.

In an embodiment, the motor control unit 200 further includes an alternating current output interface 260, and the alternating current output interface mounting hole 450 is configured to fasten the alternating current output interface 260. The alternating current output interface 260 is connected to a copper bar assembly 240 and the three input copper bars 1011. In this embodiment of this application, the alternating current output interface 260 includes three wiring interfaces 261. The three wiring interfaces 261 each are configured to be electrically connected to wiring terminals of the motor winding 130 through the three input copper bars 1011, and the three input copper bars 1011 are spaced from each other.

Still refer to FIG. 7 and FIG. 8. The motor end cover 110 includes an alternating current output interface communication hole 115, where along the first direction Y, the direct current input interface mounting hole 440 and the alternating current output interface mounting hole 450 each penetrate the integrated housing 400 and communicate with the controller accommodating cavity 430, the alternating current output interface communication hole 115 penetrates the motor end cover 110, the direct current input interface mounting hole 440 and the alternating current output interface mounting hole 450 are arranged oppositely to each other, a projection of the alternating current output interface communication hole 115 covers a projection of the alternating current output interface mounting hole 450, and a projection of the three-phase input copper bar 101 partially overlaps the projection of the alternating current output interface communication hole 115.

In this embodiment of this application, the direct current input interface mounting hole 440 and the alternating current output interface mounting hole 450 are provided opposite to each other along the first direction Y, and are respectively located at two ends of the controller accommodating cavity 430 along the first direction Y. This helps avoid electrical interference generated in a transmission process of the direct current and the alternating current, to improve security performance. In addition, the alternating current output interface mounting hole 450 is provided adjacent to the motor 100. This helps shorten a distance at which the motor control unit 200 is electrically connected to a wiring terminal of the motor 100 through the alternating current output interface 260 in the alternating current output interface mounting hole 450.

In this embodiment of this application, the alternating current output interface mounting hole 450 and the alternating current output interface communication hole 115 are jointly configured to accommodate the alternating current output interface 260. Along the first direction Y, the alternating current output interface communication hole 115 is located on a side that is of the alternating current output interface mounting hole 450 and that is away from the direct current input interface mounting hole 440, and the projection of the alternating current output interface communication hole 115 covers the projection of the alternating current output interface mounting hole 450, so that the alternating current output interface 260 can sequentially penetrate the alternating current output interface mounting hole 450 and the alternating current output interface communication hole 115. In this embodiment of this application, the three-phase input copper bar 101 is connected to the alternating current output interface 260 and an electrical connector 150. In this solution, the projection of the three-phase input copper bar 101 partially overlaps projections of the winding wiring hole 112 and the alternating current output interface communication hole 115. This helps reduce an energy loss on a transfer path.

It may be understood that, in this embodiment of this application, because an extension direction of the alternating current output interface communication hole 115 is parallel to or basically parallel to a projection direction (namely, the first direction Y), the projection of the alternating current output interface communication hole 115 is a projection of an area enclosed by the hole wall of the alternating current output interface communication hole 115. The foregoing explanations are also applicable to a projection of another through hole in this embodiment of this application.

Still refer to FIG. 7. In an embodiment, along the radial direction R of the motor, the winding wiring hole 112 is arranged between the alternating current output interface communication hole 115 and the motor shaft hole 111.

In this embodiment of this application, along the radial direction R of the motor, the alternating current output interface communication hole 115 is located on a side that is of the winding wiring hole 112 and that is away from the motor shaft hole 111, that is, the alternating current output interface communication hole 115, the winding wiring hole 112, and the motor shaft hole 111 are sequentially arranged along the radial direction R of the motor. A position relationship of the foregoing through holes reflects a layout feature of the alternating current output interface 260, the electrical connector 150, and the motor shaft 140, that is, complies with a flow direction of energy. This shortens the transfer path of energy in the powertrain 10. The motor end cover 110 integrates the alternating current output interface communication hole 115, the winding wiring hole 112, and the motor shaft hole 111, so that a volume of the motor end cover 110 can be reduced, facilitating a miniaturization design and high power density of the motor 100.

It should be noted that, in this embodiment of this application, projections of the direct current input interface mounting hole 440, the alternating current output interface mounting hole 450, and the motor bearing lubricating oil hole 144 are projections of areas enclosed by hole walls of the holes.

The motor, the powertrain, and the electric vehicle provided in embodiments of this application are described in detail above. The principles and embodiments in this application are described in this specification by using specific examples. The descriptions about embodiments are only provided to help understand the method in this application and core ideas of the method. In addition, a person of ordinary skill in the art can make variations and modifications in terms of the specific embodiments and application scopes based on the ideas in this application. In conclusion, the content of this specification shall not be construed as a limitation on this application.

## Claims

1. A motor with distributed oil-passing on a motor shaft, wherein the motor comprises a motor end cover, a motor rotor, a motor bearing, and a motor shaft, the motor end cover and the motor rotor are spaced from each other along an axial direction of the motor, the motor end cover comprises a motor shaft hole, the motor shaft hole is configured to accommodate the motor bearing and a part of the motor shaft, the motor bearing is sleeved on the motor shaft, and the motor shaft is rotatably connected to the motor end cover through the motor bearing, the motor shaft comprises a motor shaft cavity and at least one motor bearing lubricating oil hole;
along the axial direction of the motor, the motor shaft hole penetrates the motor end cover, and the motor shaft cavity penetrates the motor shaft;
along a radial direction of the motor, the motor bearing lubricating oil hole penetrates the motor shaft; and
along the axial direction of the motor, the motor bearing lubricating oil hole, the motor bearing, and the motor rotor are sequentially spaced from each other.

2. The motor according to claim 1, wherein the motor further comprises a bearing wave pad, the bearing wave pad is sleeved on the motor shaft, the bearing wave pad has a gap, and the gap of the bearing wave pad is for the motor bearing lubricating oil hole to communicate with the motor bearing;
the bearing wave pad, the motor bearing, and the motor rotor are arranged along the axial direction of the motor, and the bearing wave pad is adjacent to the motor bearing; and
a projection of the motor bearing lubricating oil hole along the radial direction of the motor is located in a projection of the bearing wave pad along the radial direction of the motor.

3. The motor according to claim 2, wherein the motor shaft comprises a plurality of motor bearing lubricating oil holes, and the plurality of motor bearing lubricating oil holes are spaced from each other along a circumferential direction of the motor;
a hole size of each of the motor bearing lubricating oil holes along the axial direction of the motor is less than a length of the bearing wave pad along the axial direction of the motor; and
along the circumferential direction of the motor, a hole size of each of the motor bearing lubricating oil holes is less than a spacing between two adjacent motor bearing lubricating oil holes.

4. The motor according to claim 1, wherein the motor shaft further comprises at least one rotor shunt hole, wherein
along the radial direction of the motor, the rotor shunt hole penetrates the motor shaft, and a projection of the rotor shunt hole at least partially overlaps a projection of the motor rotor;
along the axial direction of the motor, the motor bearing lubricating oil hole, the motor bearing, and the rotor shunt hole are spaced from each other; and
a hole size of the rotor shunt hole is greater than a hole size of the motor bearing lubricating oil hole.

5. The motor according to claim 4, wherein the motor shaft comprises a plurality of motor bearing lubricating oil holes and a plurality of rotor shunt holes, and the plurality of motor bearing lubricating oil holes are spaced from each other along a circumferential direction of the motor; and
a total length of hole sizes of the plurality of motor bearing lubricating oil holes is less than a total length of hole sizes of the plurality of rotor shunt holes.

6. The motor according to claim 5, wherein a ratio of a hole size of each of the rotor shunt holes to a hole size of each of the motor bearing lubricating oil holes is greater than or equal to 2 and less than or equal to 4.

7. The motor according to claim 4, wherein the motor further comprises a shaft hole sealing member, wherein
the shaft hole sealing member comprises a radial sealing portion and a lubricating oil circulation portion, and the radial sealing portion is configured to be sealed and fastened to an inner wall of the motor shaft cavity along the radial direction of the motor;
the radial sealing portion, the lubricating oil circulation portion, and the rotor shunt hole are arranged along the axial direction of the motor, and the lubricating oil circulation portion is fastened to the radial sealing portion; and
along the radial direction of the motor, the lubricating oil circulation portion and the inner wall of the motor shaft cavity are spaced from each other, and a projection of the motor bearing lubricating oil hole along the radial direction of the motor is located in a projection of the lubricating oil circulation portion along the radial direction of the motor.

8. The motor according to claim 7, wherein along the radial direction of the motor, a distance between the lubricating oil circulation portion and an inner wall of the motor shaft cavity is less than the hole size of the motor bearing lubricating oil hole, and the distance between the lubricating oil circulation portion and the inner wall of the motor shaft cavity is less than the hole size of the rotor shunt hole; and
a length of the lubricating oil circulation portion along the axial direction of the motor is greater than the hole size of the motor bearing lubricating oil hole.

9. The motor according to claim 7, wherein along the axial direction of the motor, a distance between the rotor shunt hole and the lubricating oil circulation portion is greater than a length of the lubricating oil circulation portion, and the distance between the rotor shunt hole and the lubricating oil circulation portion is greater than a distance between the lubricating oil circulation portion and the motor bearing.

10. A powertrain, wherein the powertrain comprises a reducer and the motor according to any one of claims 1 to 9, the reducer comprises a reducer input shaft, the reducer input shaft is fastened to the motor shaft, and the reducer input shaft is configured to communicate with the motor shaft cavity.

11. The powertrain according to claim 10, wherein the powertrain comprises an integrated housing, the integrated housing comprises a reducer accommodating cavity and a motor accommodating cavity, the motor accommodating cavity is configured to accommodate the motor, the reducer accommodating cavity is configured to accommodate the reducer, the motor accommodating cavity penetrates the integrated housing along a first direction and communicates with the reducer accommodating cavity, the first direction is parallel to an axial direction of the motor, and the motor end cover and the reducer are respectively arranged on two sides of the motor along the first direction.

12. The powertrain according to claim 11, wherein the powertrain further comprises a motor control unit and a three-phase input copper bar, the motor end cover further comprises a winding wiring hole, the winding wiring hole penetrates the motor end cover along the axial direction of the motor, the motor further comprises a motor winding, the motor winding is accommodated in the motor accommodating cavity, the three-phase input copper bar is electrically connected to the motor winding and the motor control unit through the winding wiring hole, the three-phase input copper bar comprises three input copper bars, and the three input copper bars are sequentially spaced from each other along a circumferential direction of the motor.

13. The powertrain according to claim 12, wherein the integrated housing comprises a controller accommodating cavity, a direct current input interface mounting hole, and an alternating current output interface mounting hole, the controller accommodating cavity is configured to accommodate the motor control unit, the controller accommodating cavity and the motor accommodating cavity are arranged along a second direction, the second direction is perpendicular to the first direction, and the motor end cover comprises an alternating current output interface communication hole, wherein
along the first direction, the direct current input interface mounting hole and the alternating current output interface mounting hole separately penetrate the integrated housing and communicate with the controller accommodating cavity, the alternating current output interface communication hole penetrates the motor end cover, the direct current input interface mounting hole and the alternating current output interface mounting hole are arranged opposite to each other, a projection of the alternating current output interface communication hole covers a projection of the alternating current output interface mounting hole, and a projection of the three-phase input copper bar partially overlaps a projection of the winding wiring hole and the projection of the alternating current output interface communication hole; and
along a radial direction of the motor, a spacing between the alternating current output interface communication hole and a motor shaft hole is greater than a spacing between the winding wiring hole and the motor shaft hole.

14. An electric vehicle, comprising a vehicle body, a wheel, and the motor according to any one of claims 1 to 9 or the powertrain according to any one of claims 10 to 13, wherein the motor or the powertrain is configured to drive the wheel, the vehicle body is configured to fasten the motor or the powertrain, the motor shaft cavity in the motor or in the powertrain fastened to the vehicle body is configured to communicate with a heat exchanger in the electric vehicle, and cooling oil in the heat exchanger cools a motor bearing in the motor through a motor bearing lubricating oil hole in the motor shaft cavity.
